# EUROPEAN PATENT APPLICATION

(11) **EP 3 032 796 A1**
(43) Date of publication of application: **15.06.2016**
(21) Application number: 14474002.4
(22) Date of filing: 11.12.2014
(51) Int. Cl.: H04L 29/06

(54) **Identification module for two-factor authentication with 2D visual coding**

(71) Applicant: Tatra banka, a. s., 811 06 Bratislava (SK)
(72) Inventor: Kopriva, Peter, 821 06 Bratislava (SK)

(57) **Abstract**

Portable hardware token showing 2D code for authenticating the holder in information systems of the provider of the remote electronic services, electronic banking, the sale of goods and services through unsecured public networks. The token shows a two-dimensional (2D) graphical code representing numeric, alphanumeric, special one-time code (one time password - OTP) with each use. The code is using by special reader to authenticate the user.(1)

## Description

### Field of Technology

The invention relates to two-factor authentication method in information systems. User, client or customer of these systems usually claims its identity with the help of uniquely assigned identifier (name, aliases, PID), passwords and/or one-time code generated by special hardware/software token. After verifying the validity all of the identifiers the service is provided to the appropriate user or access to the information system respectively.

### Background of the Invention

The existing solutions used as a second factor of authentication special facilities for generating one-time-use code ("one time password" - hereinafter OTP) or mobile communication tool owned by the user who, through a unique application generates an OTP or OTP is generated on the part of the service provider and through public communication network is delivered to a mobile communication tool of the user. The communication channel used to deliver OTP is different from the communication channel used to provide services or access by the service provider / information system. Such a system of authentication is referred to as the OOB - out of band. With the advent of mobile devices, as the main working tool for communicating with entities providing electronic services, in some cases is impossible not only to use the same authentication mobile communication tool but is also possible to misuse it by unauthorized persons through control of OTP generating application respectively by control or interception of the communication channel, which is providing the service itself or the provision of OTP. OTP generated by special module or special application also requires retyping the generated code, usually numeric or alphanumeric, to the logon fields of application of the service provider. In the case of high security or high demands for the complexity of generated code it is a high probability of erroneous transcription of the OTP code by the user. In addition the special mobile applications do not use HW storage for storing a unique key, which is needed to generate the OTP. It is caused by different technologies applied to individual mobile communication devices from different manufacturers and lacks of standards. There is therefore a some chance of the theft, it means creating a regular copies of such application with its internal status. Thus, such equipment is not resistant to clone.

### Substance of the Invention

These shortcomings are eliminated by the new proposed module which is integrated into the special single-purpose portable hardware device (the token), which displays a two-dimensional QR (Quick Response Code) code according to BS ISO / IEC 18004: 2006 standard or any othe 2D graphic code. The QR code in the minimal version 1 with the highest error correction rate keeps 17 numeric digits or 10 alphanumeric characters or 7 binary bytes or 4 kanji characters. The complexity of this generated code is between 36¹⁰ to 10¹⁷. In the case of modified variants of the QR code so-called micro QR in the version M4 of this code it can be generated with the highest error correction 21 numeric digits or 13 alphanumeric characters or binary bytes 9 or 5 kanji characters. The complexity of this generated code is higher than in the standard QR code and ranges from 36¹³ to 256⁹. It can be used any available pseudo-random generator as an OTP generator. The resulting QR code is displayed on a raster display token. The display can be produced by any suitable imaging technology. It seems an electronic paper is the most suitable for that purpose due to the energy-saving and thinness capability. The resulting QR code is loaded by mobile application through integrated camera, which vast majority of mobile communication devices have. Such system of generation and transmission is resistant to cloning abuse and against errors arising in the retyping of the code to the appropriate application.

This solution may additionally, due to the latter's deficiency, increase the security of the entire information system by increasing the complexity of generated code, from approx. 8 characters, as is usual today, to the 21 numerical or 13 alphanumerical code in the most limiting case.

The device is equipped with a power source, display unit, switch or set of switches to trigger the generation of different types of codes, connector plug or contact surface respectively. and integrated circuit serving the peripherals.

Device may have a different shape, it appears the most advantageous, because of 2D code usage, form of a half credit card thus with half-length dimensions according to ISO / IEC 7810, ie. 42.8 mm x 53.98 mm x 0.76 mm.
A contact surface or a connector respectively is used to initialize the device when placed in service. This option may not be used when the initialization performs both the production facility.

### Industrial application

Said device can be used as one-time code generator (one time password - OTP), for the purpose of authentication and authorization process during the communication with entities providing electronic services.

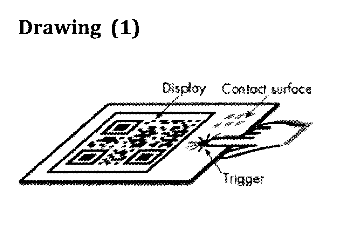

## Claims

1. A special single-purpose dedicated hardware device (token) showing two-dimensional (2D) graphical code representing numeric, alphanumeric, or special one-time code (one time password - OTP) with each use.
